# EUROPEAN PATENT SPECIFICATION

(11) **EP 3 816 040 B1**
(45) Date of publication and mention of the grant of the patent: **10.01.2024**
(21) Application number: 19382944.7
(22) Date of filing: 29.10.2019
(51) Int. Cl.: B64C 7/00, B64C 9/02, F16J 15/10

(54) **SEAL FOR AN AIRCRAFT**
DICHTUNG FÜR EIN FLUGZEUG
JOINT POUR UN AÉRONEF

(43) Date of publication of application: 05.05.2021
(73) Proprietor: Airbus Operations, S.L.U., 28906 Getafe (Madrid) (ES)
(72) Inventor: GARCIA-SACRISTAN, Angel, 28906 Getafe (ES)
(74) Representative: Elzaburu S.L.P.

(56) References cited:
- EP-A2- 1 686 056
- WO-A1-2017/007304
- FR-A1- 2 789 144
- US-A1- 2010 282 903
- US-A1- 2018 172 159
- US-B2- 8 485 472

## Description

### Field of the invention

The invention relates to a seal for an aircraft. The invention specifically refers to a seal located between an aircraft fairing and the surface of a lifting surface. More specifically, the seal of the invention may be adapted for a gap between a wing upper cover and panels of the upper belly fairing in the Karman area.

### Background of the invention

It is known to seal with aerodynamic seals the gap existing between the wing upper covers and the panels of the upper belly fairing in the Karman area. The seal ensures the surface of the aircraft remains aerodynamic.

The mentioned gap between the wing upper covers and the panels of the upper belly fairing is not constant. The gap varies with the different flight conditions. The gap is larger when the aircraft is on ground than during flight. With a seal installed in the gap, this results in a minimum seal compression when the aircraft is on ground and a maximum seal compression during flight. For this reason, the seal shall be flexible enough to seal the gap in all flight conditions.

Therefore, in addition to its tightness function, the seal shall absorb the relative movements between the fairing, on the one hand, and the lifting surface, on the other hand.

Flexible is to be interpreted as capable of being flexed, i.e., the seal is capable of being repeatedly bent.

Currently, these seals comprise an elongated body comprising a Y-shaped cross-section having two legs. The seal is attached, for instance riveted, to the belly fairing panels and rests against the surface of the wing on both legs. Known Y-section seals are made of silicone rubber with an internal reinforcement of glass fabric and externally covered and reinforced with a polyester fabric, with an external low friction polyester impregnated woven fabric.

The above described seals may be damaged after a certain number of flights due to the aerodynamic and differential pressure loads, resulting in in-service annoyance (noise in the cabin). Typical examples of damages of these seals are the tearing of the seal in the forward end of the seal and the breaking of the edge of the seal, both damages occurring on the outer leg of the seal, i.e., the leg farthest away from the fuselage. Such seals, when damaged, must be replaced.

It is known that one solution to reduce the risk of damage in such Y-shaped seals is to fill the space between the two legs of the seal with sealant, but this is more a 'repair' solution than a 'design' solution. The above indicated solution is not totally effective as it depends on the quality of the sealing process. If the sealant is broken the seal may eventually fail, as indicated in the previous paragraph. Additionally, the sealant results in a weight penalty for the aircraft.

Furthermore, it is necessary to remove the belly fairing panels, for maintenance or repair operations. Thus, another drawback is that the sealant must be cut and removed previously to the removal operation. Additionally, before the installation of the belly fairing panels, the area of the wing may have traces of sealant that has to be cleaned.

It is known document US8485472 disclosing a sealing for a fairing against transverse airflow between a wing and a fuselage of an aircraft. Inner and outer sides of the sealing are provided with lips biased against the fairing and the wing. At least two gaskets are positioned between respective ends of the sides, thus sealing the fairing and the wing against longitudinal airflow.

It is also known document US20180172159 disclosing an aircraft assembly having a drag-inducing discontinuity. A seal assembly includes a seal body arranged to fair and/or seal the discontinuity and a sealed chamber, wherein the sealed chamber is pressurised such that in response to changes in the ambient pressure relative to the internal pressure of the chamber the sealed chamber alters the behaviour of the seal body.

It is also known document EP1686056 disclosing reinforced cover for openings in an aerodynamic contour of a vehicle, with a first attachment section attachable to a structural element of the vehicle, on a first axial plane. A second elastic section which covers an opening which is located between a fixed part and a moving part of the vehicle and provided with a low-friction coating on its inner surface, an outer surface with a fiberglass layer. A main internal body of an elastic material, a flexible transition section between the first and the second section. The outer surface of the second section flushing with the outer surface and extending towards the free end as a continuation of the outer surface of the fixed part.

### Summary of the invention

A first object of the invention is a seal for an aircraft, said seal is of the kind that comprises an elongated body comprising a Y-shaped cross-section, i.e., the seal is a body with more length than width in proportion and having a cross-section with two legs and an additional branch located approximately opposite to the bisector of the two legs.

The seal is configured to be fixed to a fairing of the aircraft and to be applied or to rest against the surface of a lifting surface of the aircraft, for instance, a wing, for performing its sealing function of the gap existing between said two elements.

In an embodiment, the seal may be fixed to the fairing through the additional branch and the two legs may be applied against the surface of the lifting surface.

The claimed seal comprises a flexible connection extending or spanning between the two legs, thus joining both legs. Flexible is understood in this application as an element capable of being flexed, i.e., the connection is capable of being bent, specially repeatedly. The connection is thus able to be flexed according to the seal requirements and according to the loads to which it is exposed. The connection shape will be changed due to the relative movements of the fairing and the lifting surface during flight conditions.

The flexible connection will limit the separation between both legs to the length of the flexible connection, when the seal is deformed. More specifically, the length of the flexible connection may be defined to ensure that the reaction load developed by the flexible connection on the legs prevents the lift of the edge of the outer leg of the seal.

Therefore, the claimed invention has the main advantage that the sealant is avoided, also having the additional following advantages over the use of a sealant located between the two legs:
- Less weight of the seal.
- Maintenance and removal or replacement of the belly fairing panels is easier as the seal is not glued to the wing and, thus, it is reduced the time required for these operations.

It is also an object of the invention an aircraft according to claim 13.

### Description of the figures

To complete the description and in order to provide for a better understanding of the invention, a set of drawings is provided. Said drawings form an integral part of the description and illustrate preferred embodiments of the invention. The drawings comprise the following figures.
Figure 1 shows a schematic cross section of a known seal and its attachment to the Karman panel of the belly fairing.
Figure 2 shows a schematic cross section of a known seal filled with sealant between the two legs.
Figure 3 shows a cross section of an embodiment of the seal installed in the panel of the belly fairing.
Figure 4 shows a cross section of the embodiment of the seal corresponding to figure 3 in cruise condition of the aircraft.
Figure 5 shows a detail of the ends of one of the legs of the seal corresponding to figure 4.
Figure 6 shows a schematic lateral view of the embodiment of two contiguous seals.
Figure 7 shows a perspective view of a seal according to the embodiment shown in figure 6.
Figure 8 shows an aircraft and the and the location of a belly fairing Karman in the upper side of a wing.

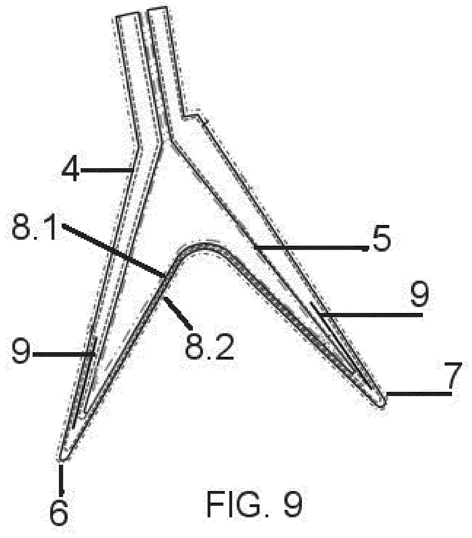

Figure 9 shows a schematic cross section of an embodiment of the seal with reinforcements.

### Detailed description of the invention

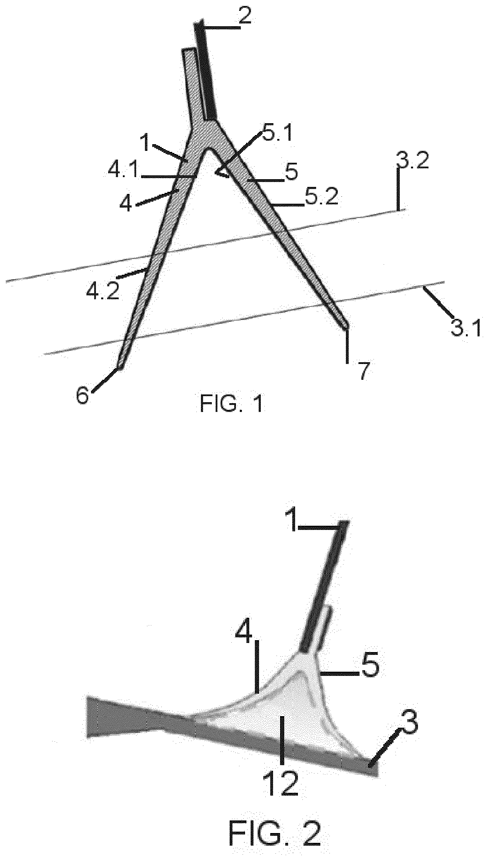

Figure 1 shows a known seal (1) and its attachment to the fairing (2), specifically to the Karmann panel of the belly fairing. The seal (1) further rests or is applied to the surface (3.1, 3.2) of a lifting surface (3), specifically a wing, through the two legs (4, 5) of its Y-shaped cross-section. The wing surface (3.1, 3.2) may have different positions between two limit positions. The first limit position corresponds to the nominal position in which the aircraft is on ground and the gap between the belly fairing (2) and the wing surface (3.1) is wider. The second limit position corresponds to the cruise position of the aircraft wherein the gap between the belly fairing (2) and the wing surface (3.1) is narrower. The ends (6, 7) of the legs (4, 5) would rests on the wing surface (3.1, 3.2) and the legs (4, 5) would deform according to the position said surface (3.1, 3.2).

Each leg (4, 5) comprises two opposite sides, an inner side (4.1, 5.1) facing the other leg (4, 5) and an outer side (4.2, 5.2) opposite to the inner side (4.1, 5.1).

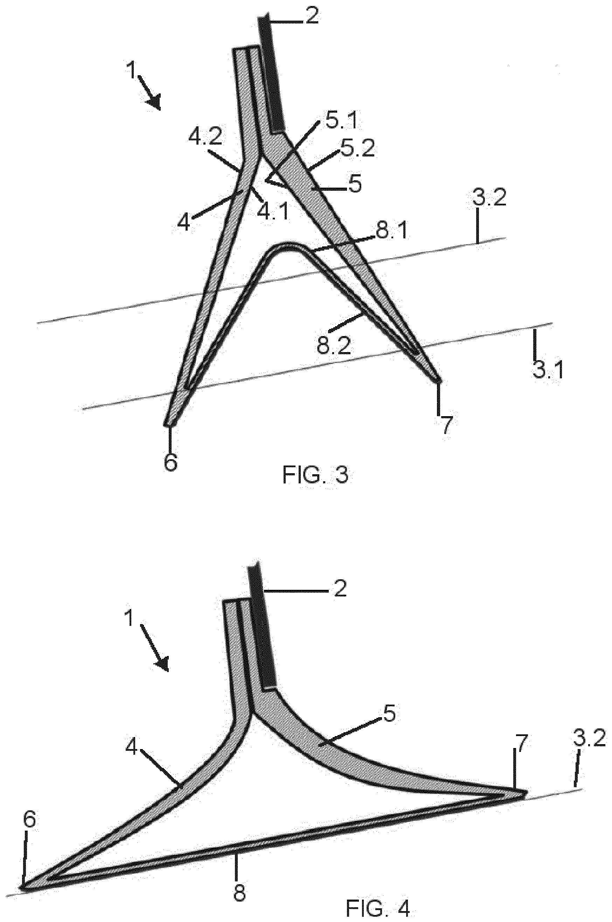

Similarly, as shown in the embodiment of figure 3, the flexible connection (8) may also comprise two sides (8.1, 8.2), an inner side (8.1) located towards the two legs (4, 5) and an outer side (8.2) opposite to the inner side (8.1).

Figure 2 shows a seal (1) filled with sealant (12) between the two legs (4, 5) of the seal (1) as explained in the state of the art.

Figure 3 discloses an embodiment of the invention. Each of the legs (4, 5) has an end (6, 7) and the seal (1) comprises the flexible connection (8) extending between those ends (6, 7), free ends (6, 7), of the two legs (4, 5).

In the present invention, the flexible connection (8) is further joined to the legs (4, 5) via the inner sides (4.1, 5.1) of the ends (6, 7).

As the seal (1) comprises an elongated body, in an embodiment, the flexible connection (8) spans along the length of the elongated body of the seal (1). Alternatively, in another embodiment, instead of extending the full length of the elongated body of the seal (1), the flexible connection (8) may extend just a portion of its length.

A flexible connection (8) spanning along the length of the elongated body of the seal (1) has the advantage that, firstly, it is easier to manufacture and, secondly, loads are better distributed along the length of the seal (1).

In an embodiment, the flexible connection (8) comprises silicone rubber and additionally, the inner side (8.1) of the flexible connection (8) may comprise a covering layer of glass fabric covering said inner side (8.1).

The outer side (8.2) of the flexible connection (8) may comprise a covering layer of polyester fabric.

Additionally, the outer side (8.2) of the flexible connection (8) may comprise a covering layer of a low friction polyester impregnated woven fabric.

Therefore, in an embodiment the flexible connection (8) may comprise silicone rubber, an inner side of a covering layer of glass fabric, an outer side of a covering layer of polyester fabric and a further covering layer of a low friction polyester impregnated woven fabric. Additionally, at least one of the legs (4, 5) comprises a reinforcement (9) extending in a cross-section from the end (6, 7) of the leg along a portion of the length of the leg (4, 5). Thus, the reinforcement (9) is located at the end (6, 7) of at least one leg (4, 5). It improves the stiffness of the leg (4, 5) of the seal (1) to ensure its proper functioning. In the shown embodiment, both legs (4, 5) comprise the mentioned reinforcement (9).

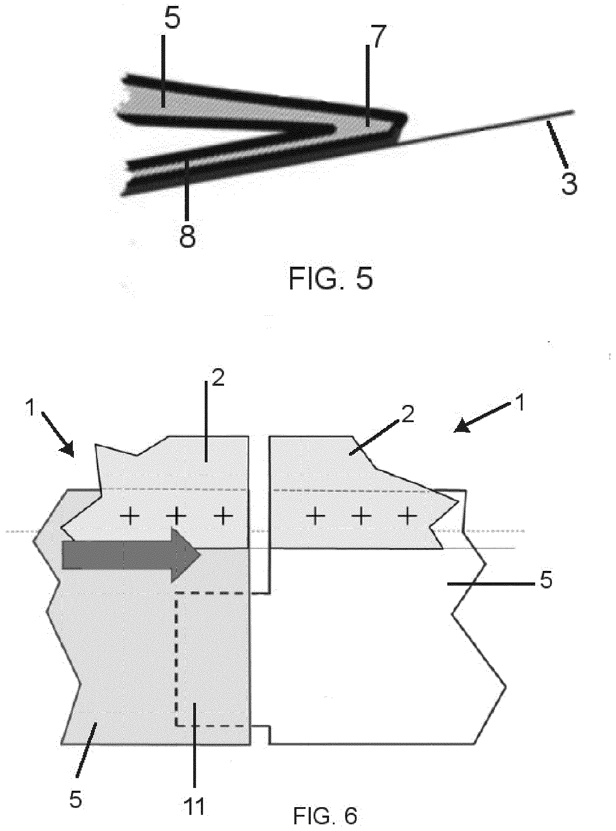

Preferably, the length of the flexible connection (8) in a cross-section of the seal (1) is such that, in cruise condition of the aircraft, the flexible connection (8) supports tension loads coming from the legs (4, 5) due to the separation between both legs (4, 5). Thus, the flexible connection (8) is in tension while the legs (4, 5) are under compression loads as shown in figures 4 and 5. The flexible deformation of the seal (1) results in an flexible load that pushes the edges (6, 7) of the seal (1) against the wing surface (3.1, 3.2) and counteracts the lift load, due to the aerodynamic loads, in the edge (6, 7) of the seal (1).

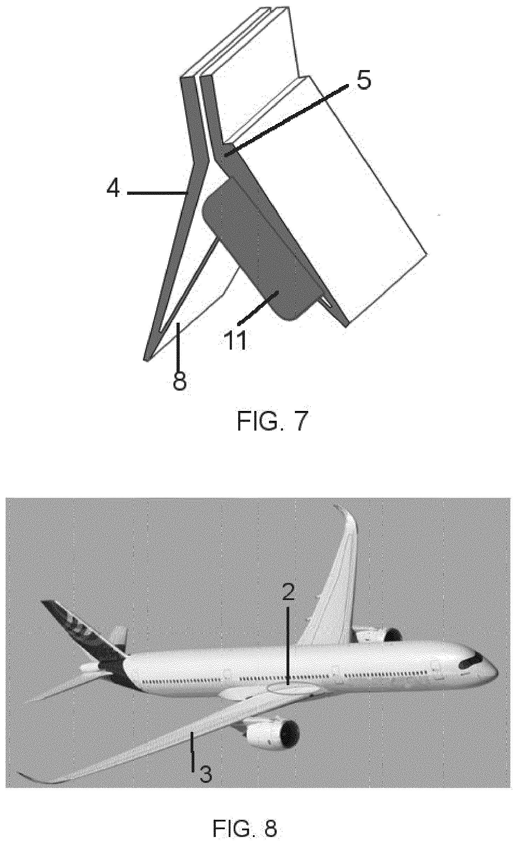

In the embodiments shown in figures 6 and 7, the seal (1) comprises a tab (11) extending or protruding from one of the legs (4, 5) in the longitudinal direction of the seal (1).

A key issue in the aerodynamic seals (1) is to provide additional support and continuity. The longitudinal ends of the seals (1) are their weakest points. For solving this, the tab (11) may be covered by the leg (4, 5) of a contiguous seal (1) for continuity purposes. Specifically, the tab (11) is located in the outer leg (5), i.e., the leg (5) that is configured to be located farthest away from the fuselage. This outer leg (5) will be in contact with the flowing airflow. The tab (11) will be configured to be underneath the outer leg (5) of a seal (1) located upstream.

Finally, figure 8 shows an aircraft comprising a lifting surface (3) and a fairing (2), the lifting surface (3) and the fairing (2) defining a gap between them wherein a seal according to the invention is located.

## Claims

1. Seal (1) for an aircraft, the seal (1) comprising an elongated body comprising a Y-shaped cross-section with two legs (4, 5) and an additional branch located approximately opposite to the bisector of the two legs (4, 5), each of the legs (4, 5) having an edge (6, 7) located opposite to the branch, the seal (1) being configured to be fixed to a fairing (2) of the aircraft and configured to be applied against the surface of a lifting surface (3) of the aircraft, the seal (1) further comprising a flexible connection (8) extending between the edges (6, 7) of the two legs (4, 5), **characterised by** each leg (4, 5) comprising two opposite sides, an inner side (4.1, 5.1) facing the other leg (4, 5) and an outer side (4.2, 5.2) opposite to the inner side (4.1, 5.1), the flexible connection (8) being joined to the inner sides (4.1, 5.1) of the edges of the legs (4, 5).

2. Seal (1) for an aircraft, according to claims 1, wherein the flexible connection (8) spans along the length of the elongated body.

3. Seal (1) for an aircraft, according to any preceding claim, wherein the length of the flexible connection (8) in a cross-section of the seal (1) is configured such that, in cruise condition of the aircraft, the flexible connection (8) supports tension loads due to the separation between both legs (4, 5).

4. Seal (1) for an aircraft, according to any preceding claim, wherein it comprises a tab (11) extending from one of the legs (4, 5) in the longitudinal direction of the elongated body of the seal (1).

5. Seal (1) for an aircraft, according to claim 4, wherein the tab (11) is configured to be covered by a leg (4, 5) of a contiguous seal (1).

6. Seal (1) for an aircraft, according to any preceding claim, wherein the flexible connection (8) comprises silicone rubber.

7. Seal (1) for an aircraft, according to any preceding claim, wherein the flexible connection (8) comprises two sides (8.1, 8.2), an inner side (8.1) located towards the two legs (4, 5) and an outer side (8.2) opposite to the inner side (8.1).

8. Seal (1) for an aircraft, according to claim 7, wherein the inner side (8.1) of the flexible connection (8) comprises a covering layer of glass fabric.

9. Seal (1) for an aircraft, according to claim 7 or 8, wherein the outer side (10) of the flexible connection (8) comprises a covering layer of polyester fabric.

10. Seal (1) for an aircraft, according to any preceding claim 7 to 9, wherein the outer side (10) of the flexible connection (8) comprises a covering layer of a low friction polyester impregnated woven fabric.

11. Seal (1) for an aircraft, according to any preceding claim, wherein it comprises a reinforcement (9) of at least one leg (4, 5), the reinforcement (9) extending in a cross-section from the ends (6, 7) along a portion of the length of the legs (4, 5).

12. Seal (1) for an aircraft, according to claim 11, wherein the material of the reinforcement (9) is glass fiber or polyester.

13. Aircraft comprising a lifting surface (3) and a fairing (2), the lifting surface (3) and the fairing (2) defining a gap between them, the aircraft further comprising a seal (1) according to any of the preceding claim and located in the gap, the elongated body of the seal (1) fixed to the fairing (2) and applied against the surface of the lifting surface (3).

## Patentansprüche

1. Dichtung (1) für ein Flugzeug, wobei die Dichtung (1) einen länglichen Körper mit einem Y-förmigen Querschnitt mit zwei Schenkeln (4, 5) und einem der Mittellinie der zwei Schenkel (4, 5) in etwa entgegengesetzten zusätzlichen Zweig umfasst, wobei jeder Schenkel (4, 5) eine dem Zweig entgegengesetzte Kante (6, 7) aufweist, wobei die Dichtung (1) dazu ausgelegt ist, an einer Verkleidung (2) des Flugzeugs fixiert zu werden, und dazu ausgelegt ist, an der Fläche einer Tragfläche (3) des Flugzeugs aufgebracht zu werden, wobei die Dichtung (1) ferner eine flexible Verbindung (8) umfasst, die sich zwischen den Kanten (6, 7) der zwei Schenkel (4, 5) erstreckt,
**dadurch gekennzeichnet, dass** jeder Schenkel (4, 5) zwei entgegengesetzte Seiten, eine dem anderen Schenkel (4, 5) zugewandte Innenseite (4.1, 5.1) und eine der Innenseite (4.1, 5.1) entgegengesetzte Außenseite (4.2, 5.2) umfasst, wobei die flexible Verbindung (8) mit den Innenseiten (4.1, 5.1) der Kanten der Schenkel (4, 5) verbunden ist.

2. Dichtung (1) für ein Flugzeug nach Anspruch 1, wobei die flexible Verbindung (8) entlang der Länge des länglichen Körpers verläuft.

3. Dichtung (1) für ein Flugzeug nach einem der vorstehenden Ansprüche, wobei die Länge der flexiblen Verbindung (8) im Querschnitt der Dichtung (1) derart ausgelegt ist, dass die flexible Verbindung (8) im Reiseflug des Flugzeugs Zuglasten aufgrund der Trennung zwischen beiden Schenkeln (4, 5) aufnimmt.

4. Dichtung (1) für ein Flugzeug nach einem der vorstehenden Ansprüche, umfassend eine Lasche (11), die sich von einem der Schenkel (4, 5) in Längsrichtung des länglichen Körpers der Dichtung (1) erstreckt.

5. Dichtung (1) für ein Flugzeug nach Anspruch 4, wobei die Lasche (11) dazu ausgelegt ist, von einem Schenkel (4, 5) einer angrenzenden Dichtung (1) bedeckt zu sein.

6. Dichtung (1) für ein Flugzeug nach einem der vorstehenden Ansprüche, wobei die flexible Verbindung (8) Silikonkautschuk umfasst.

7. Dichtung (1) für ein Flugzeug nach einem der vorstehenden Ansprüche, wobei die flexible Verbindung (8) zwei Seiten (8.1, 8.2), eine in Richtung der zwei Schenkel (4, 5) angeordnete Innenseite (8.1) und eine der Innenseite (8.1) entgegengesetzte Außenseite (8.2) umfasst.

8. Dichtung (1) für ein Flugzeug nach Anspruch 7, wobei die Innenseite (8.1) der flexiblen Verbindung (8) eine Deckschicht aus Glasgewebe umfasst.

9. Dichtung (1) für ein Flugzeug nach Anspruch 7 oder 8, wobei die Außenseite (10) der flexiblen Verbindung (8) eine Deckschicht aus Polyester umfasst.

10. Dichtung (1) für ein Flugzeug nach einem der vorstehenden Ansprüche 7 bis 9, wobei die Außenseite (10) der flexiblen Verbindung (8) eine Deckschicht aus einem reibungsarmen, mit Polyester imprägnierten Gewebe umfasst.

11. Dichtung (1) für ein Flugzeug nach einem der vorstehenden Ansprüche, umfassend eine Verstärkung (9) mindestens eines Schenkels (4, 5), wobei sich die Verstärkung (9) im Querschnitt von den Enden (6, 7) entlang eines Abschnitts der Länge der Schenkel (4, 5) erstreckt.

12. Dichtung (1) für ein Flugzeug nach Anspruch 11, wobei das Material der Verstärkung (9) Glasfaser oder Polyester ist.

13. Flugzeug, umfassend eine Tragfläche (3) und eine Verkleidung (2), wobei die Tragfläche (3) und die Verkleidung (2) einen Spalt dazwischen definieren, wobei das Flugzeug ferner eine Dichtung (1) nach einem der vorstehenden Ansprüche umfasst, die in dem Spalt angeordnet ist, wobei der längliche Körper der Dichtung (1) an der Verkleidung (2) fixiert und an der Fläche der Tragfläche (3) aufgebracht ist.

## Revendications

1. Joint (1) pour un aéronef, le joint (1) comprenant un corps allongé comprenant une section transversale en Y pourvue de deux pattes (4, 5) et d'une branche supplémentaire située approximativement à l'opposé de la bissectrice des deux pattes (4, 5), chacune des pattes (4, 5) étant pourvue d'un bord (6, 7) situé à l'opposé de la branche, le joint (1) étant configuré pour être fixé à un carénage (2) de l'aéronef et configuré pour s'appliquer contre la surface d'une surface portante (3) de l'aéronef, le joint (1) comprenant en outre une liaison souple (8) s'étendant entre les bords (6, 7) des deux pattes (4, 5),
**caractérisé en ce que** chaque patte (4, 5) comprend deux côtés opposés, un côté intérieur (4.1, 5.1) en regard de l'autre patte (4, 5) et un côté extérieur (4.2, 5.2) opposé au côté intérieur (4.1, 5.1), la liaison souple (8) étant réunie aux côtés intérieurs (4.1, 5.1) des bords des pattes (4, 5).

2. Joint (1) pour un aéronef selon la revendication 1, dans lequel la liaison souple (8) s'étend sur la longueur du corps allongé.

3. Joint (1) pour un aéronef selon l'une quelconque des revendications précédentes, dans lequel la longueur de la liaison souple (8) dans une section transversale du joint (1) est configurée de telle manière que, en régime de croisière de l'aéronef, la liaison souple (8) supporte des charges de traction dues à la séparation entre les deux pattes (4, 5).

4. Joint (1) pour un aéronef selon l'une quelconque des revendications précédentes, comprenant une languette (11) s'étendant depuis l'une des pattes (4, 5) dans la direction longitudinale du corps allongé du joint (1).

5. Joint (1) pour un aéronef selon la revendication 4, dans lequel la languette (11) est configurée pour être recouverte par une patte (4, 5) d'un joint (1) contigu.

6. Joint (1) pour un aéronef selon l'une quelconque des revendications précédentes, dans lequel la liaison souple (8) comprend du caoutchouc silicone.

7. Joint (1) pour un aéronef selon l'une quelconque des revendications précédentes, dans lequel la liaison souple (8) comprend deux côtés (8.1, 8.2), un côté intérieur (8.1) situé vers les deux pattes (4, 5) et un côté extérieur (8.2) opposé au côté intérieur (8.1).

8. Joint (1) pour un aéronef selon la revendication 7, dans lequel le côté intérieur (8.1) de la liaison souple (8) comprend une couche de revêtement en toile de verre.

9. Joint (1) pour un aéronef selon la revendication 7 ou 8, dans lequel le côté extérieur (10) de la liaison souple (8) comprend une couche de revêtement en toile polyester.

10. Joint (1) pour un aéronef selon l'une quelconque des revendications 7 à 9, dans lequel le côté extérieur (10) de la liaison souple (8) comprend une couche de revêtement en toile tissée imprégnée de polyester à faible frottement.

11. Joint (1) pour un aéronef selon l'une quelconque des revendications précédentes, comprenant un renfort (9) d'au moins une patte (4, 5), le renfort (9) s'étendant en section transversale depuis les extrémités (6, 7) le long d'une partie de la longueur des pattes (4, 5).

12. Joint (1) pour un aéronef selon la revendication 11, dans lequel le matériau du renfort (9) est de la fibre de verre ou du polyester.

13. Aéronef comprenant une surface portante (3) et un carénage (2), la surface portante (3) et le carénage (2) définissant entre eux un espace, l'aéronef comprenant en outre un joint (1) selon l'une quelconque des revendications précédentes et situé dans l'espace, le corps allongé du joint (1) étant fixé au carénage (2) et s'appliquant contre la surface de la surface portante (3).
